# EUROPÄISCHE PATENTSCHRIFT

(11) **EP 3 001 071 B1**
(45) Veröffentlichungstag und Bekanntmachung des Hinweises auf die Patenterteilung: **15.08.2018**
(21) Anmeldenummer: 14186837.2
(22) Anmeldetag: 29.09.2014
(51) Int. Cl.: F16H 57/04

(54) **Öldurchbohrung Planetensteg**
Oil borehole planet web
Barre planétaire - alésage d'huile

(43) Veröffentlichungstag der Anmeldung: 30.03.2016
(73) Patentinhaber: Flender GmbH, 46395 Bocholt (DE)
(72) Erfinder: Boland, Klaus, 46499 Hamminkeln (DE); Daners, Dominikus, 45701 Herten (DE); Degeling, Markus, 46414 Rhede (DE)
(74) Vertreter: Maier, Daniel Oliver

(56) Entgegenhaltungen:
- EP-A1- 2 594 789
- EP-A2- 1 431 575
- WO-A1-2006/053940

## Beschreibung

Die Erfindung betrifft eine Planetengetriebe, insbesondere für eine Windkraftanlage, gemäß dem Oberbegriff des Anspruchs 1 und wie aus der EP1431575A bekannt ist. Moderne Windkraftanlagen unterscheiden sich äußerlich kaum. Die Unterschiede liegen im Wesentlichen in der Ausgestaltung der Getriebe, die zwischen dem Rotor und dem Generator vorgesehen sind, um die geringe Rotationsgeschwindigkeit der Rotornabe in eine höhere Drehgeschwindigkeit für den Generator umzusetzen. Für große Anlagen sind Übersetzungsverhältnisse von 1:100 üblich. Um solch große Übersetzungsverhältnisse zu realisieren, kommen in der Regel mehrstufige Getriebe zum Einsatz. Dabei wird in den gängigen Antriebskonzepten eine Kombination aus Planetengetriebestufen und Stirnradgetriebestufen bevorzugt, wobei in den ersten, drehmomentstarken Getriebestufen häufig schräg verzahnte Planetengetriebe für eine kompakte Bauweise zum Einsatz kommen, während in der anschließenden Hochleistungsstufe ein schräg verzahnte Stirnradgetriebe verwendet wird.

Dabei ist die Rotorwelle bzw. Rotornabe mit dem Planetenträger der ersten Stufe verbunden. Dieser ist an zwei Positionen auf axial gegenüberliegenden Seiten der Planetenräder - d.h. an der Antriebsseite und an der Abtriebsseite der Getriebestufe - in dem Getriebegehäuse gelagert und treibt die Planetenräder an. Alternativ ist auch eine einseitige Lagerung möglich. Das Hohlrad ist fest mit dem Getriebegehäuse verbunden, so dass es zu einer umlaufenden Bewegung der Planetenräder im Getriebe kommt. Das Drehmoment wird von den Planetenrädern auf das Sonnenrad übertragen, welches über ein Zahnwellenprofil mit dem Planetenträger der zweiten Stufe verbunden ist. Der Vorgang der zweiten Planetenstufe ist identisch mit der ersten Stufe. In der letzten Getriebestufe findet durch das vom Sonnenrad der zweiten Stufe angetriebene Stirnrad eine weitere Übersetzung statt, so dass eine Übersetzung von einer anfangs kleinen Drehzahl der Rotorwelle bei hohem Drehmoment auf eine hohe Drehzahl bei kleinem Drehmoment der Generatorwelle stattfindet.

Bei herkömmlichen Planeten-Getrieben und Planeten- Stirnradgetrieben für Windkraftanlagen werden in erster Linie Wälzlager eingesetzt, um die Planetenräder in dem Planetenradträger sowie den Planetenradträger in dem Getriebegehäuse zu lagern.

Vereinzelt kommen auch hydrodynamische betriebene Gleitlager zur Anwendung. Bekannte Gleitlagerwerkstoffe, die hier zum Einsatz kommen, sind beispielsweise Weißmetalle mit Legierungsbestandteilen und Bonze-Legierungen. Im Allgemeinen werden Gleitlager in Industrieanwendungen mit einem Schmierspalt von etwa 15 bis 20 µm bezogen auf den Durchmesser im Betriebspunkt ausgelegt. Als zulässiger mittlerer dynamischer Druck wird von Lagerherstellern wenigstens 5 MPa für Weißmetall angegeben.

Der Einsatz von Gleitlagern ist allerdings relativ selten. Gründe hierfür sind vielfach vorherrschende instationäre Betriebsbedingungen und temporär äußerst niedrige Gleitgeschwindigkeiten bei gleichzeitig extremer Beanspruchung der Gleitlager. Herkömmliche Gleitlager werden vor allem bei Einsatzbedingungen mit hohen bis sehr hohen Drehzahlen verwendet. Aufgrund dessen werden üblicherweise für Lagerstellen in Windkraftgetrieben nahezu ausschließlich Wälzlager verwendet.

Unabhängig davon, ob Wälzlager oder Gleitlager eingesetzt werden, wird versucht den Betrieb innerhalb der Mischreibung durch Schmiermaßnahmen zu vermeiden und auf diese Weise den Verschleiß an den Lagerstellen so gering wie möglich zu halten. Die zu treffenden Maßnahmen zur Schmierung und Kühlung der Getriebebauteile insbesondere im Bereich der Lagerstellen sind jedoch aufwendig.

Zur Versorgung der Planetenradlager mit Schmiermittel sind in den Planetenträgerachsen Schmiermittelkanäle ausgebildet, denen das Schmiermittel über einen in dem Planetenträger ausgebildeten Schmiermittel-Zuführkanal zugeführt wird. Der Schmiermittel-Zuführkanal wiederum ist mit einem Schmiermittelkanal, welcher die Wandung des Getriebegehäuses insbesondere axial durchsetzt, über eine Gleitbuchse verbunden, welche in eine Ringnut, die in der abtriebsseitigen Stirnfläche des Planetenträgers ausgebildet ist, eingesetzt ist. Die Gleitbuchse weist einen zentralen Verbindungskanal auf, welcher den Schmiermittel-Zuführkanal in dem Planetenträger mit dem Schmiermittelkanal in der Gehäusewandung verbindet. Die Gleitbuchse ist hierzu an dem Gehäuse drehfest gehalten und der Planetenträger ist relativ zu der Gleitbuchse drehbar. Dazu sind die radialen Wandflächen der Ringnut sowie die damit in Kontakt stehenden radialen Wandflächen der Gleitbuchse entsprechend toleriert ausgebildet. Mit anderen Worten sind der Außendurchmesser der Gleitbuchse und der Innendurchmesser der Ringnut passgenau aufeinander abgestimmt, und sind in gleicher Weise bilden der Innendurchmesser der Ringnut und der Innendurchmesser der Gleitbuchse eine Passung. Diese Herstellung von jeweils zwei Passungsmaßen sowohl an der Innenseite und an der Außenseite an der Gleitbuchse, als auch an der Innenseite und an der Außenseite des Planetenträgers sind schwierig herzustellen.

Aufgabe der Erfindung ist es daher, ein Planetengetriebe der eingangs genannten Art so auszugestalten, dass die Schmiermittelversorgung der Planetenradlager vereinfacht wird.

Diese Aufgabe ist bei einem Planetengetriebe der eingangs genannten Art dadurch gelöst, dass der Planetenträger gegenüber dem Getriebegehäuse durch eine am Getriebegehäuse drehfest gehaltenen Gleitbuchse radial abgestützt ist, dass die Gleitbuchse an ihrer Außenfläche eine radial äußere Gleitfläche und eine radial innere Gleitfläche mit einer dazwischenliegenden Schulterfläche definiert und korrespondierend hierzu an der Innenfläche des Planetenträgers eine radial äußere Lagerfläche und eine radial innere Lagerfläche mit einer dazwischenliegenden Schulterfläche ausgebildet sind, wobei die Gleitflächen der Gleitbuchse und die Lagerflächen des Planetenträgers flächig in Anlage kommen, und dass die Gleitbuchse gegenüber dem Planetenträger derart positioniert ist, dass zwischen der Schulterfläche, die zwischen der radial inneren Gleitfläche und der radial äußeren Gleitfläche der Gleitbuchse gebildet wird, und der Schulterfläche, welche zwischen der radial inneren Lagerfläche und der radial äußeren Lagerfläche des Planetenträgers gebildet wird, ein ringförmiger Schmiermittel-Verteilungskanal gebildet wird, in welchen die Schmiermittel-Zuführkanäle des Planetenträgers einlassseitig münden und die über einen in der Gleitbuchse ausgebildeten Schmiermittelversorgungskanal mit der externen Schmiermittel-zufuhr verbunden ist.

Erfindungsgemäß wird ein ringförmiger Schmiermittel-Verteilungskanal zwischen der Außenfläche der Gleitbuchse und der Innenfläche des Planetenträgers gebildet. Hierzu sind an der Außenfläche der Gleitbuchse zwei radial zueinander versetzt angeordnete Gleitflächen und an der Innenseite des Planetenträgers zwei korrespondierende radial zueinander versetzte Lagerflächen ausgebildet, die miteinander flächig in Kontakt stehen und entsprechend toleriert sein müssen. Allerdings gestaltet sich die Herstellung von zwei Gleitflächen an der Außenseite der Gleitbuchse und von zwei Lagerflächen an der Innenseite des Planetenträgers deutlich einfacher und prozesssicherer als die Herstellung jeweils einer Innen- und einer Außenpassfläche an der Gleitbuchse und einer Ringnut des Planetenträgers, wie sie im Stand der Technik erforderlich sind.

Der Schmiermittel-Verteilungskanal, welcher zwischen den Schulterflächen der Gleitbuchse und des Planetenträgers ausgebildet ist und an seiner radialen Außenseite durch den Planetenträger und an seiner radialen Innenseite durch die Gleitbuchse begrenzt wird, erstreckt sich ringförmig um die zentrale Getriebeachse und ermöglicht eine optimale Schmiermittelübergabe an die Schmiermittel-Zuführkanäle, welche in dem rotierenden Planetenträger ausgebildet sind. Die Schulterflächen zwischen den Gleitflächen der Gleitbuchse und/oder zwischen den Lagerflächen des Planetenträgers erstrecken sich dabei bevorzugt radial oder zumindest im Wesentlichen radial.

Gemäß einer bevorzugten Ausführungsform der Erfindung erstreckt sich der Schmiermittel-Versorgungskanal rein axial in der Getriebebuchse, so dass er leicht herzustellen ist und axial in den Schmiermittel-Verteilungskanal mündet.

In an sich bekannter Weise ist gemäß einer bevorzugten Ausführungsform der Erfindung vorgesehen, dass die Schmiermittelkanäle in den Planetenträgerachsen sich entlang des Außenumfangs der jeweiligen Planetenträgerachse verlaufende ringförmige Schmiermittel-Sammelnut umfassen, in welche ein korrespondierender Schmiermittelzuführkanal des Planetenträgers mündet. Durch diese Ausgestaltung wird eine sichere Übergabe des Schmiermittels von den Schmiermittel-Zuführkanälen des Planetenträgers an die Schmiermittel-Kanäle in den Planetenträgerachsen ermöglicht, da aufgrund der ringförmigen Ausgestaltung der Sammelnuten die Schmiermittel-Zuführkanäle auch während der Rotation des Planetenträgers in ständiger Verbindung mit der Schmiermittel-Sammelnut stehen.

Die Gleitbuchse besteht im Bereich ihrer Gleitflächen aus geeigneten Gleitlagerwerkstoffen, wie sie an sich bekannt sind. Insbesondere können Kupfer-Zink- Legierungen oder Kupfer-Zinn-Legierungen zum Einsatz kommen. Dabei werden vorzugsweise Kupfer-Zink-Legierungen mit einem Zinkanteil zwischen 6% und 40% oder Kupfer-Zinn-Legierungen mit einem Zinnanteil zwischen 4% und 12% verwendet. Denkbar sind auch Aluminium-Zinn-Legierungen, wobei diese dann bevorzugt einen Zinnanteil zwischen 6% und 40% aufweisen. Der Gleitlagerwerkstoff kann auf die Trägerplatte walzplattiert sein. Ebenso ist es möglich, die Gleitflächen der eingesetzten Gleitflächen mit einer PVD-Beschichtung zu versehen. Ebenso kann die Gleitbuchse auch vollständig aus einer Gleitlagerwerkstatt bestehen.

Nachfolgend wird ein Ausführungsbeispiel der Erfindung unter Bezugnahme auf die beiliegende Zeichnung beschrieben. In der Zeichnung zeigt:
- Figur 1: eine Ausführungsform eines erfindungsgemäßen Plane-tengetriebes in schematischer Schnittansicht, und
- Figur 2: den Ausschnitt A aus Figur 1 in vergrößerter Darstellung.

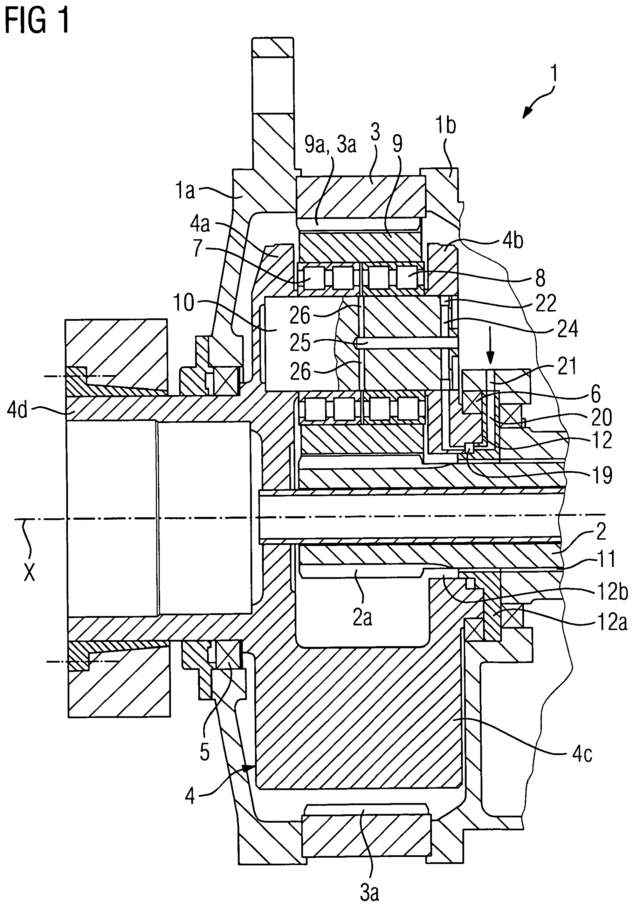

In Figur 1 ist eine Übersetzungsstufe eines Planetengetriebes gemäß einer Ausführungsform der vorliegenden Erfindung dargestellt, das auf dem Turm einer nicht gezeigten Windkraftanlage angeordnet ist und dazu dient, einen Generator durch einen mehrere Flügel tragenden Rotor der Windkraftanlage anzutreiben und dabei die langsame Drehzahl der Rotorwelle bzw. Rotornabe in eine hohe Drehzahl der Generatorwelle umzusetzen. Das Planetengetriebe umfasst ein Getriebegehäuse 1, in dem eine Planetenstufe als eine erste Übersetzungsstufe schließen sich weitere, in der Zeichnung nicht dargestellte Übersetzungsstufen an, die als Stirnrad- oder als Planetenstufe ausgebildet sein können. Die dargestellte erste Planetenstufe des Planetengetriebes umfasst ein zentrales Sonnenrad 2, das in dem Getriebegehäuse 1 um eine zentrale Getriebeachse X rotierbar gehalten ist und eine Außenverzahnung 2a trägt. Zu dem Planetengetriebe gehört ferner ein Hohlrad 3, das konzentrisch zu der zentralen Getriebeachse X fest in dem Getriebegehäuse 1 angeordnet ist und eine Innenverzahnung 3a aufweist.

Ferner umfasst das Planetengetriebe einen Planetenträger 4. Dieser ist in dem Getriebegehäuse 1 über Wälzlager 5, 6, um die Getriebeachse X drehbar gelagert sowie axial abgestützt und besteht aus zwei parallelen Seitenwangen 4a, 4b, die durch Stege 4c miteinander verbunden sind. Schließlich gehören zu dem Planetengetriebe mehrere Planetenräder 9, die über Planetenradlager 7,8 an dem Planetenträger 4 drehbar gelagert sind und Außenverzahnungen 9a aufweisen, die mit der Innenverzahnung 3a des Hohlrads 3 und der Außenverzahnung 2a des Sonnenrads in Eingriff stehen. In dem Ausführungsbeispiel sind insgesamt drei Planetenräder 9 vorgesehen, die mit 120°Grad Versatz zueinander angeordnet und an parallel zu der zentralen Getriebeachse X verlaufenden Planetenträgerachsen 10, welche sich zwischen den Seitenwangen 4a, 4b des Planetenträgers 4 erstrecken, durch die entsprechenden Planetenradlager 7,8 drehbar abgestützt sind. Der Planetenträger 4 weist ferner einen als Hohlwelle ausgebildeten Verbindungsabschnitt 4d auf, über welchen der Planetenträger 4 mit der Rotorwelle des Rotors verbunden bzw. verbindbar ist.

Das Getriebegehäuse 1 umfasst in dem dargestellten Ausführungsbeispiel zwei Gehäuseteile 1a, 1b, zwischen welchen das Hohlrad 3 positioniert und mit denen das Hohlrad 3 fest verbunden ist. Auf der zum Rotor weisenden Antriebsseite des Planetengetriebes ist ein Gehäuseteil in der Form eines Deckels 1a vorgesehen, welcher mit dem Hohlrad 3 verbunden ist und eine zentrale Durchgriffsöffnung für die Hohlwelle 4a des Planetenträgers 4 aufweist.

An der Auslassseite des Planetengetriebes wird das Getriebegehäuse 1 durch eine Drehmomentstütze 1b gebildet. Diese ist deckelartig ausgebildet und definiert eine zentrale Durchgangsöffnung 11 für das Sonnenrad 2. Die zentrale Durchgangsöffnung 11 ist hier in einer Gleitbuchse 12 vorgesehen, welche in die Drehmomentstütze 1b von der Abtriebsseite des Planetengetriebes her eingesetzt und mit der Drehmomentstütze 1b fest verbunden ist. Die Gleitbuchse 12 ist L-förmig im Querschnitt ausgebildet und weist einen radialen Schenkel 12a und einen axialen Schenkel 12b auf. Der radiale Schenkel 12a der Gleitbuchse 12 steht der abtriebsseitigen Seitenwange 4b des Planetenträgers 4 gegenüber und bildet mit dieser einen definierten radialen Spalt. Dieser stellt sicher, dass die Gleitbuchse 12 an dieser Stelle keine Lagerfunktion für den Planetenträger 4 übernehmen kann.

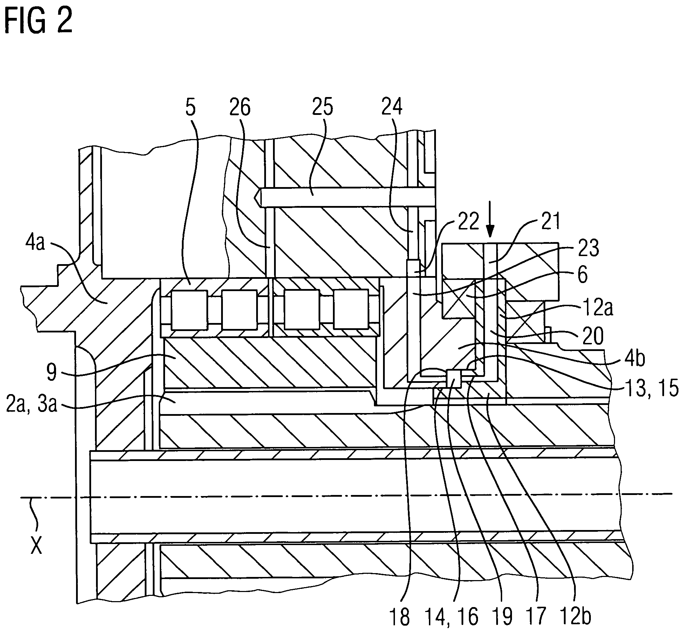

In radialer Richtung ist der Planetenträger 4 an dem axialen Abschnitt 12b der Gleitbuchse 12 abgestützt. Hierzu weist der axiale Abschnitt 12b der Gleitbuchse 12 an seiner Außenfläche zwei radial zueinander versetzt angeordnete Gleitflächen 13, 14 auf, und sind an der Innenseite des Planetenträgers 4 zwei korrespondierende radial zueinander versetzte Lagerflächen 15, 16 ausgebildet. Die Gleitflächen 13, 14 und die Lagerflächen 15, 16 stehen miteinander flächig in Kontakt und sind entsprechend nach Art von Passungen toleriert. Konkret ist die radial äußere Gleitfläche 13 an einem nahe zu dem radialen Abschnitt 12a gelegenen Bereich des axialen Abschnitts 12b der Gleitbuchse 12 ausgebildet, während die radial innere Gleitfläche 14 nahe des freien Endes des axialen Abschnitts 12b positioniert ist. Zwischen den Gleitflächen 13, 14 der Gleitbuchse 12 und den korrespondierenden Lagerflächen 15, 16 an der Innenseite des Planetenträgers 4 werden dabei sich in radialer Richtung erstreckende Schulterflächen 17, 18 gebildet. Wie die Figur 2 gut erkennen lässt, liegen diese Schulterflächen 17, 18 einander mit axialem Abstand gegenüber, so dass zwischen den Schulterflächen 17, 18 ein ringförmiger Schmiermittel-Verteilungskanal 19 gebildet wird. Dieser wird an seiner Außenseite durch die Innenfläche des Planetenträgers 4 und an seiner radialen Innenseite durch die Außenfläche des axialen Abschnitts 12b der Gleitbuchse 12 begrenzt. Der Schmiermittel-Verteilungskanal 19 ist über einen in der Gleitbuchse 12 ausgebildeten Schmiermittelversorgungskanal 20 mit einer externen Schmiermittelzufuhr 21 verbunden.

Der Schmiermittelverteilungskanal 19 und der Schmiermittel-versorgungskanal bilden einen Teil eines Schmiersystems, welches dazu dient, den Planetenträgerachsen 10 und den Planetenradlagern 7, 8 im Betrieb kontinuierlich ein Schmiermittel, insbesondere ein Schmieröl zuzuführen, und so die Planetenradlager 7, 8 im Betrieb zu schmieren sowie die Planetenradlager 7, 8 und die Planetenträgerachsen 10 zu kühlen. Hierzu sind in den Planetenträgerachsen 10 entsprechende Schmiermittelkanäle ausgebildet. Diese umfassen einlassseitig eine sich entlang des Außenumfangs der jeweiligen Planetenträgerachse 10 erstreckende ringförmige Schmiermittel-Sammelnut 22, welche mit dem ringförmigen Schmiermittel-Verteilungskanal 19 über einen in dem Planetenträger 4 ausgebildeten Schmiermittelzuführkanal 23 verbunden ist. Die Schmiermittel-Sammelnut 22 ihrerseits ist über mehrere sich radial in der Planetenträgerachse 10 erstreckende Verbindungskanäle 24 mit einem zentralen Schmiermittelkanal 25 verbunden, der sich in axialer Richtung zentral durch die Planetenträgerachse 10 erstreckt, und von dem zentralen Schmiermittelkanal 25 gehen etwa auf mittlere axialer Höhe der Planetenträgerachsen 10 radiale Schmiermittelverteilungskanäle 26 ab, welche sich bis zur Außenseite der Planetenträgerachsen 10 erstrecken und damit in den Bereich zwischen den beiden Planetenradlagern 7, 8 münden.

In der Zeichnung nicht dargestellt ist, dass an das Getriebegehäuse 1 über eine außen verlegte Ölleitung eine Ölförderpumpe angeschlossen ist, die aus dem in dem Getriebegehäuse 1 befindlichen Ölsumpf Schmieröl ansaugt und es unter Druck nach einer Filtration und ggf. einer Kühlung über die Schmiermittelzufuhr 21 in das Getriebegehäuse 1 zurückfördert.

Im Betrieb wird dem ringförmigen Schmiermittel-VerteilungsKanal 19, welcher zwischen dem Planetenträger 4 und der Gleitbuchse 12 gebildet wird, über den in der Gleitbuchse 12 ausgebildeten Schmiermittelversorgungskanal 20 ein Schmiermittel in der Form von Schmieröl zugeführt. Dieses wird über die entsprechenden Schmiermittel-Zuführkanäle 23 in dem Planetenträger 4 den Schmiermittel-Sammelnuten 22 der Planetenträgerachsen 10 zugeführt. Durch die ringförmige Ausgestaltung der Schmiermittel-Sammelnuten 22 und des Schmiermittel-Verteilungskanals 19 stehen dabei die Schmiermittel-Zuführkanäle 23 des Planetenträgers 4 auch bei einer Rotation des Planetenträgers 4 in ständiger Verbindung mit den Schmiermittel-Sammelnuten 22 und dem Schmiermittel-Verteilungs- Kanal 19, so die Planetenträgersachen 10 kontinuierlich mit Öl versorgt werden. Von den Schmiermittel-Sammelnuten 22 wird das Schmieröl über die radialen Verbindungskanäle 24, den zentralen Ölkanal und die Schmiermittelverteilungskanäle in den Planetenträgerachsen 10 den Planetenradlagern 7, 8 zugeführt.

## Patentansprüche

1. Planetengetriebe, insbesondere für eine Windkraftanlage, mit einem Getriebegehäuse (1), einem zentralen Sonnenrad (2), das in dem Getriebegehäuse (1) um eine zentrale Getriebeachse (X) rotierbar gehalten ist und eine Außenverzahnung (2a) trägt, einem Hohlrad (3), das konzentrisch zu der zentralen Getriebeachse (X) in dem Getriebegehäuse (1) angeordnet ist und eine Innenverzahnung (3a) aufweist, einem Planetenträger (4), der in dem Getriebegehäuse (1) um die zentrale Getriebeachse (X) drehbar gelagert ist und Seitenwangen (4a) aufweist, und mehreren Planetenrädern (9), die über Planetenradlager (7, 8) an dem Planetenträger (4) um Planetenträgerachsen (11) drehbar gelagert sind und die mit der Innenverzahnung (3a) des Hohlrads (3) und der Außenverzahnung (2a) des Sonnenrads (2) in Eingriff stehen, wobei in den Planetenträgerachsen (10) Schmiermittelkanäle ausgebildet sind, um die Planetenradlager (7, 8) mit Schmiermittel zu versorgen, und in dem Planetenträger (4) Schmiermittel-Zuführkanäle (23) ausgebildet sind, die mit den Schmiermittelkanälen verbunden und einlassseitig an eine externe Schmiermittel-Zufuhr (21) anschließbar oder angeschlossen sind, wobei der Planetenträger (4) gegenüber dem Getriebegehäuse (1) durch eine an dem Getriebegehäuse (1) drehfest gehaltenen Gleitbuchse (12) radial abgestützt ist, dass die Gleitbuchse (12) an ihrer Außenfläche eine radial äußere Gleitfläche (13) und eine radial innere Gleitfläche (14) mit einer dazwischenliegenden Schulterfläche (17) definiert und korrespondierend hierzu an der Innenfläche des Planetenträgers (4) eine radial äußere Lagerfläche (15) und eine radial innere Lagerfläche (16) mit einer dazwischenliegenden Schulterfläche (18) ausgebildet sind, wobei die Gleitflächen (13, 14) der Gleitbuchse und die Lagerflächen (15, 16) des Planetenträgers flächig in Anlage kommen, und dass die Gleitbuchse (12) gegenüber dem Planetenträger (4) derart positioniert ist, dass zwischen der Schulterfläche (17) der Gleitbuchse (12), die zwischen der radial inneren Gleitflächen (13) und der radial äußeren Gleitfläche (14) gebildet ist, und der Schulterfläche (18), welche zwischen der radial inneren Lagerfläche (16) und der radial äußeren Lagerfläche (15) des Planetenträgers (4) gebildet wird, ein ringförmiger Schmiermittel-Verteilungskanal (19) gebildet wird, in welchen die Schmiermittel-Zuführkanäle (23) einlassseitig münden und die über einen in der Gleitbuchse (12) ausgebildeten Schmiermittelversorgungskanal (20) mit der externen Schmiermittel-Zufuhr (21) verbunden ist, **dadurch gekennzeichnet, dass** der Schmiermittel-Verteilungskanal (19) an einer Außenseite durch eine Innenfläche des Planetenträgers (4) und an einer radialen Innenseite durch eine Außenfläche eines axialen Abschnitts (12b) der Gleitbuchse (12) begrenzt ist.

2. Planetengetriebe nach Anspruch 1, **dadurch gekennzeichnet, dass** sich die Schulterflächen (17, 18) zwischen den Gleitflächen (13, 14) der Gleitbuchse (12) und/oder zwischen den Lagerflächen (15, 15) des Planetenträgers (4) radial oder zumindest im Wesentlichen radial erstrecken.

3. Planetengetriebe nach Anspruch 1 oder 2, **dadurch gekennzeichnet, dass** sich der Schmiermittelversorgungskanal (20) rein axial in der Gleitbuchse (12) erstreckt.

4. Planetengetriebe nach einem der vorherigen Ansprüche, **dadurch gekennzeichnet, dass** die Schmiermittelkanäle in den Planetenträgerachsen (10) eine entlang des Außenumfangs der jeweiligen Planetenträgerachse (10) verlaufende ringförmige Schmiermittel-Sammelnut (22) umfassen, in welche ein Schmiermittelzuführkanal (23) des Planetenträgers (4) mündet.

## Claims

1. Planetary gear, in particular for a wind power plant, comprising a gear housing (1), a central sun gear (2) which is rotatably held in the gear housing (1) about a central gear axis (X) and bears external teeth (2a), a ring gear (3) which is arranged concentrically to the central gear axis (X) in the gear housing (1) and has internal teeth (3a), a planetary carrier (4) which is rotatably mounted in the gear housing (1) about the central gear axis (X) and has side cheeks (4a), and a plurality of planet gears (9) which are rotatably mounted via planet gear bearings (7, 8) on the planetary carrier (4) about planetary carrier axles (11) and which are in engagement with the internal teeth (3a) of the ring gear (3) and the external teeth (2a) of the sun gear (2), wherein lubricant channels are formed in the planetary carrier axles (10) in order to supply lubricant to the planet gear bearings (7, 8) and lubricant supply channels (23) are formed in the planetary carrier (4), said lubricant supply channels being connected to the lubricant channels and being able to be attached or being attached on the inlet side to an external lubricant supply (21), wherein the planetary carrier (4) is radially supported relative to the gear housing (1) by a slide bush (12) held fixedly in terms of rotation on the gear housing (1), in that the slide bush (12) on its outer surface defines a radial outer sliding surface (13) and a radial inner sliding surface (14) with an interposed shoulder surface (17) and correspondingly thereto a radial outer bearing surface (15) and a radial inner bearing surface (16) with an interposed shoulder surface (18) are formed on the inner surface of the planetary carrier (4), wherein the sliding surfaces (13, 14) of the slide bush and the bearing surfaces (15, 16) of the planetary carrier bear flat against one another and in that the slide bush (12) is positioned relative to the planetary carrier (4) such that an annular lubricant distribution channel (19) is formed between the shoulder surface (17) of the slide bush (12) which is formed between the radial inner sliding surfaces (13) and the radial outer sliding surface (14) and the shoulder surface (18) which is formed between the radial inner bearing surface (16) and the radial outer bearing surface (15) of the planetary carrier (4), the lubricant supply channels (23) discharging into said lubricant distribution channel on the inlet side and being connected to the external lubricant supply (21) via a lubricant supply channel (20) formed in the slide bush (12), **characterised in that** the lubricant distribution channel (19) is delimited on an outer face by an inner surface of the planetary carrier (4) and on a radial inner face by an outer surface of an axial portion (12b) of the slide bush (12).

2. Planetary gear according to claim 1, **characterised in that** the shoulder surfaces (17, 18) between the sliding surfaces (13, 14) of the slide bush (12) and/or between the bearing surfaces (15, 15) of the planetary carrier (4) extend radially or at least substantially radially.

3. Planetary gear according to claim 1 or 2, **characterised in that** the lubricant supply channel (20) extends purely axially in the slide bush (12).

4. Planetary gear according to one of the preceding claims, **characterised in that** the lubricant channels in the planetary carrier axles (10) comprise an annular lubricant collection groove (22) extending along the outer circumference of the respective planetary carrier axle (10), a lubricant supply channel (23) of the planetary carrier (4) discharging into said lubricant collection groove.

## Revendications

1. Train épicycloïdal, notamment pour une éolienne, comprenant un carter (1), une roue (2) solaire centrale, qui est maintenue tournante autour d'un axe (X) central du train dans le carter (1) et qui porte une denture (2a) extérieure, une couronne (3), qui est montée concentriquement à l'axe (X) central dans le carter (1) et qui a une denture (3a) intérieure, une cage (4) de transmission planétaire, qui est montée tournante autour de l'axe (X) central dans le carter (1) et qui a des joues (4a) latérales, et plusieurs roues (9) satellites, qui sont montées tournantes autour d'axes (11) de la cage de transmission planétaire sur la cage (4) de transmission planétaire, par des paliers (7, 8) de roues satellites et qui sont en prise avec la denture (3a) intérieure de la roue (3) à denture intérieure et avec la denture (2a) extérieure de la roue (2) solaire, des canaux pour du fluide de lubrification étant constitués dans les axes (10) des cages (4) de transmission pour alimenter les paliers (7, 8) des roues satellites en fluide de lubrification et dans les cages de transmission sont constitués des canaux (23) d'apport de fluide de lubrification, qui communiquent avec les canaux pour du fluide de lubrification et qui sont raccordés du côté de l'entrée à un apport (21) extérieur de fluide de lubrification, ou qui peuvent l'être, la cage (4) de transmission étant appuyée radialement par rapport au carter (1) par une douille (12) de glissement maintenue fixe en rotation sur le carter (1), en ce que la douille (12) de glissement définit à sa surface extérieure une surface (13) de glissement extérieure radialement et une surface (14) de glissement intérieure radialement avec une surface (17) d'épaulement entre elles et, en correspondance à cela, sont constituées sur la surface intérieure de la cage (4) une surface (15) de palier extérieure radialement et une surface (16) de palier intérieure radialement, ayant une surface (18) d'épaulement entre elles, les surfaces (13, 14) de glissement de la douille de glissement et les surfaces (15, 16) de palier de la cage venant en contact par une surface et en ce que la douille (12) de glissement est placée par rapport à la cage (4), de manière à former, entre la surface (17) d'épaulement de la douille (12) de glissement, qui est formée entre la surface (13) de glissement intérieure radialement et la surface (14) de glissement extérieure radialement, et la surface (18) d'épaulement, qui est formée entre la surface (16) de palier intérieure radialement et la surface (15) de palier extérieure radialement, de la cage (4), un canal (19) annulaire de répartition du fluide de lubrification, dans lequel débouchent, du côté de l'entrée, des canaux (23) d'apport de fluide de lubrification et qui communique avec l'apport (21) extérieur de fluide de lubrification, par un canal (20) d'alimentation en fluide de lubrification formé dans la douille (12) de glissement, **caractérisé en ce que** le canal (19) de répartition de fluide de lubrification est délimité, sur un côté extérieur, par une surface intérieure de la cage (4) et, sur un côté intérieur radial, par une surface extérieure d'un tronçon (12b) axial de la douille (12) de glissement.

2. Train épicycloïdal suivant la revendication 1, **caractérisé en ce que** les surfaces (17, 18) d'épaulement, entre les surfaces (13, 14) de glissement de la douille (12) de glissement et/ou entre les surfaces (15, 15) de palier de la cage (4), s'étendent radialement ou au moins sensiblement radialement.

3. Train épicycloïdal suivant la revendication 1 ou 2, **caractérisé en ce que** le canal (20) d'alimentation en fluide de lubrification s'étend d'une manière purement axiale dans la douille (12) de glissement.

4. Train épicycloïdal suivant l'une des revendications précédentes, **caractérisé en ce que** les canaux pour du fluide de lubrification, dans les axes (10) de la cage, comprennent une rainure (22) collectrice de fluide de lubrification annulaire, s'étendant le long du pourtour extérieur de l'axe (10) respectif de la cage, rainure dans laquelle débouche un canal (23) d'apport de fluide de lubrification de la cage (4).
